# EUROPÄISCHE PATENTSCHRIFT

(11) **EP 1 476 680 B1**
(45) Veröffentlichungstag und Bekanntmachung des Hinweises auf die Patenterteilung: **28.12.2005**
(21) Anmeldenummer: 02774418.4
(22) Anmeldetag: 26.09.2002
(51) Int. Cl.: F16H 25/24, B60N 2/02

(54) **SPINDEL-ANTRIEB, SOWIE VERFAHREN ZUR HERSTELLUNG DESSELBEN**
SPINDLE DRIVE AND METHOD FOR THE PRODUCTION THEREOF
ORGANE D' ENTRAINEMENT DE VIS-MERE ET SON PROCEDE DE FABRICATION

(30) Priorität: 15.02.2002 DE 10206240
(43) Veröffentlichungstag der Anmeldung: 17.11.2004
(73) Patentinhaber: ROBERT BOSCH GMBH, 70442 Stuttgart (DE)
(72) Erfinder: HUESGES, Mario, 77830 Buehlertal (DE); OBERLE, Hans-Juergen, 76437 Rastatt (DE)
(86) Internationale Anmeldenummer: PCT/DE2002/003633
(87) Internationale Veröffentlichungsnummer: WO 2003/069189

(56) Entgegenhaltungen:
- EP-A- 1 223 073
- DE-A- 3 726 801
- US-A- 5 144 849
- US-A- 5 316 258
- US-A- 5 349 878

## Beschreibung

### Stand der Technik

Die Erfindung betrifft einen Spindel-Antrieb und ein Verfahren zur Herstellung desselben, insbesondere für eine Sitzverstellung oder eine Servolenkung, nach der Gattung der unabhängigen Ansprüche.

Mit der EP 0 759 374 A2 ist eine gattunsgemässe Vorrichtung zum Verstellen eines Sitzes im Kraftfahrzeug bekannt geworden, bei dem eine Gewindespindel elektromotorisch über ein Schneckengetriebe angetrieben wird. Dabei kämmt die als Schneckenwelle ausgebildete Ankerwelle des Motors mit einem Schneckenrad, das drehfest auf der Gewindespindel angeordnet ist. Die Gewindespindel ist auf der einen Seite in einer Gewindemutter drehbar geführt, die mit einem gestellfesten Bauteil verbunden ist. Zur axialen Lagerung der Gewindespindel im Bereich des Getriebegehäuses ist am anderen Ende der Gewindespindel eine gewölbte Lagerfläche angeformt, die sich an einer Anschlagfläche im Getriebegehäuse abstützt. Die einstückige Ausbildung dieser axialen Lageroberfläche mit der Gewindespindel ist sehr aufwendig und kostenintensiv, da diese eine hohe Oberflächenqualität mit einer großen Maßgenauigkeit aufweisen muß.

Des weiteren sind axiale Lagerflächen bekannt, die aus Kunststoff, beispielsweise einstückig mit dem auf der Gewindewelle angeformten Schneckenrad, ausgebildet sind. Die Verwendung von Kunststoff hat jedoch den Nachteil eines starken Verschleißes und hoher Reibungskräfte.

### Vorteile der Erfindung

Das erfindungsgemäße Vefahren zur Herstellung eines Spindelantriebs mit den Merkmalen des Anspruchs 1 hat den Vorteil, daß die Spindel direkt mittels eines Lagerelements aus Metall gelagert werden kann, ohne daß hierfür eine aufwendige, spanende Bearbeitung des freien Endes der Spindel notwendig ist. Dadurch ist eine hohe Verschleißbeständigkeit und eine geringe Lagerreibung gewährleistet, wobei die Lagerfläche aufgrund des separat gefertigten Lagerelements einfach und kostengünstig hergestellt werden kann. Die Ausformung einer Aufnahme für das Lagerelement ist beim Spritzgußverfahren in einem Arbeitsgang mit dem Kunststoff-Bauteil ohne zusätzlichen Aufwand möglich. Gegenüber dem Umspritzen des Lagerelements hat das erfindungsgemäße Verfahren den Vorteil, daß Hinterspritzungen zwischen dem Lagerelement und der Spindel wirksam verhindert werden können, da die Stirnfläche der Spindel beim Spritzgußverfahren abgedichtet wird, um so die Aussparung am Kunststoff-Bauteil anzuformen. Das Lagerelement kann dann ohne Verwendung zusätzlicher Werkzeuge anschließend in die Aufnahme gedrückt werden.

Wird für die Anformung des Kunststoff-Bauteils ein Kunststoff verwendet, der beim Abkühlen sein Volumen verringert, so ist es vorteilhaft, das Lagerelement sofort nach dem Anspritzen des Kunststoff-Bauteils im noch warmen Zustand einzupressen, da dann das Lagerelement zusätzlich durch das Schrumpfen des Kunststoffs mit einer hohen Kraft fixiert wird, so daß verhindert wird, daß sich das Lagerelement im Kunststoff-Bauteil verdreht oder verschiebt.

Günstig ist es, wenn das Kunststoff-Bauteil ein Teil des Abtriebsrads ist, da dann das Lagerelement gleichzeitig mit dem Abtriebsrad angeformt wird.

Wird die Aufnahme als im wesentlichen zylinderförmige Aussparung ausgeführt, kann beispielsweise ein rotationssymmetrisches Lagerelement in jeder beliebigen Stellung in die Aussparung gepreßt werden, wodurch die Montage wesentlich vereinfacht wird. Durch das axial offene Ende der Aussparung ist gewährleistet, daß sich kein Kunststoff zwischen dem Lagerelement und dem Spindelende oder der Anlaufscheibe befindet.

Indem an die Aussparung ein Hinterschnitt mittels Spritzgußverfahren angeformt wird, erfährt das Lagerelement zusätzlich zur Preßpassung eine axiale Fixierung, die ein Verlieren des Lagerelements verhindert. Durch solch eine Ringschnappverbindung sind keine weiteren Arbeitsschritte zur Befestigung des Lagerelements notwendig.

Wird als Werkstoff für das Lagerelement - insbesondere für die Kugel - Stahl verwendet, kann das Axiallager eine hohe Flächenpressung aufnehmen. Außerdem hat Stahl einen geringen Wärmeausdehnungskoeffizienten, wodurch das Lagerelement beim Einpressen in das noch warme Kunststoff-Bauteil umso fester fixiert wird.

Um die Verschleißfestigkeit und damit die Lebensdauer des Spindelantriebs zu erhöhen, wird die Oberfläche des Lagerelements gehärtet, was durch die separate Ausbildung des Lagerelements in einfacher Weise vor dessen Montage durchgeführt werden kann. Die damit verbundene Reduzierung des Axialspiels führt zu einer geringeren Geräuschbildung beim Umschalten der Drehrichtung.

Der erfindungsgemäße Spindel-Antrieb nach den Merkmalen des unabhängigen Anspruchs 7 hat den Vorteil, daß die Lagerfläche nicht an das Ende der Spindel angeformt werden muß, sondern einfach separat, beispielsweise als eine Kugel gefertigt werden kann. Die somit qualitativ hochwertig herstellbare Lagerfläche erlaubt es, hohe axiale Kräfte ohne wesentliche Reibungsverluste aufzunehmen.

Durch den Ringschnappverschluß wird verhindert, daß das Lagerelement bei der Montage verloren wird und unterstützt zusätlich die Preßpassung zwischen dem Kunststoff-Bauteil und dem Lagerelement. Dabei erweist sich eine Differenz der Durchmesser der Aussparung am deren offenem Ende und deren mittleren axialen Bereich von etwa 0,1 bis 0,4 mm als geeignet, um einerseits die Peßpassung zu unterstützen und andererseits das Lagerelement mit vertretbarem Kraftaufwand einzupressen, ohne das Kunststoff-Bauteil zu zerstören. Die Aussparung und das Lagerelement weisen hierbei einen Durchmesser von etwa 3 bis 7 mm auf. Dies stellt einen guten Kompromiß dar, um einerseits die Flächenpressung und andererseits die Reibung der Anlauffläche zu begrenzen. Bei einem Durchmesser von etwa 5 mm liegen diese beiden Größen in einem besonders günstigen Verhältnis zueinander.

Zum einfacheren Einführen des Lagerelements in die Aussparung weist diese an ihrem offenen Ende eine Phase auf, so daß radiale Toleranzen der Montagevorrichtung ausgeglichen werden können.

Besonders einfach ist die Herstellung des Lagerelements als Kugel, wie sie beispielsweise in üblichen Kugellagern verwendet werden. Durch die kugelförmige Lagerfläche wird die Reibung zur Anlaufscheibe minimiert, wodurch der Verstellantrieb geringere Verluste aufweist.

Stützt sich das Lagerelement an einer Anlaufscheibe ab, die am Getriebegehäuse angeordnet ist, werden die auftretenden Lagerkräfte über das Getriebegehäuse abgeleitet. Bei der Ausführung der Anlaufscheibe als Teil einer Getriebegehäusewand sind keine zusätzlichen Bauteile für die axiale Lagerung notwendig.

Der größte Teil des Lagerelements ist radial vom Kunststoff-Bauteil umschlossen, ein Teil des Lagerelements steht über das Kunststoff-Bauteil über, um die eigentliche Lagerfläche zu bilden. Beträgt der Überstand des Lagerelements in etwa zwischen einem Viertel und einem Zwanzigstel seines Durchmessers, so wird das Lagerelement einerseits mittels des Kunststoff-Bauteils noch sicher fixiert, andererseits ist der Überstand groß genug, um einen gewissen Abrieb oder ein leichtes Verkippen der Spindel zuzulassen.

### Zeichnung

In der Zeichnung ist ein Ausführungsbeispiel einer erfindungsgemäßen Vorrichtung dargestellt und in der nachfolgenden Beschreibung näher erläutert.

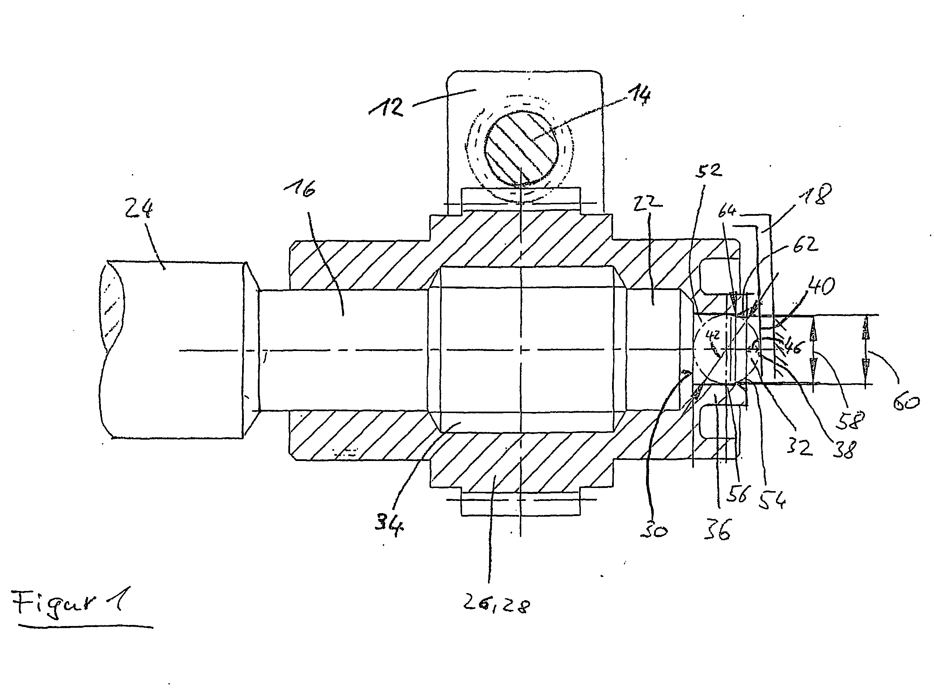

Figur 1 zeigt ein Ausführungsbeispiel einer Sitzverstellvorrichtung mit einem Spindelantrieb.

### Beschreibung des Ausführungsbeispiels

Das in Figur 1 dargestellte Ausführungsbeispiel zeigt einen erfindungsgemäßen Spindelantrieb, bei dem ein Elektromotor 12 über eine als Schnecke 14 ausgeformte Ankerwelle eine Spindel 16 antreibt. Dazu ist auf der Spindel ein als Schneckenrad 26 ausgeführtes Abtriebsrad 28 angeordnet, das aus Kunststoff gefertigt und mittels Spritzgußverfahren über eine an der Spindel 16 angeformte Struktur 34 aufgespritzt ist. Die Schnecke 14 und das Abtriebsrad 28 bilden ein Schneckengetriebe, das von einem angedeuteten Getriebegehäuse 18 umschlossen ist. Die Spindel 16 ist an ihrem einen Ende 22 im Getriebegehäuse 18 gelagert und ragt aus diesem heraus, wobei der herausragende Teil 24 der Spindel 16 beispielsweise mit einer nicht dargestellten Gewindemutter kämmt, die fest an einem Bauteil fixiert ist, und dadurch eine Relativbewegung gegenüber einem Sitzteil ermöglicht, an dem das Getriebegehäuse 18 befestigt ist. An der Stirnseite 30 der Spindel 16 ist einstückig mit dem Abtriebsrad 28 ein Kunststoff-Bauteil 36 mittels Spritzgußverfahren drehfest an die Spindel 16 angeformt. Beim Anspritzen des Kunststoff-Bauteils 36 wird durch die Formgebung der Spritzgußform eine Aufnahme 52 für ein Lagerelement 32 am Kunststoff-Bauteil 36 ausgeformt, die im Ausführungsbeispiel als zylinderförmige Aussparung 52 ausgebildet ist, die axial ein offenes Ende 54 aufweist, aus dem das Lagerelement 32 ragt. Die Aussparung 52 weist einen Hinterschnitt 64 auf, bei der der Durchmesser 58 im mittleren axialen Bereich 56 der Aussparung 52 um etwa 0,1 bis 0,4 mm größer ist, als der Durchmesser 60 am offenen Ende 56 der Aussparung 52. Das Lagerelement 32 ist als Stahlkugel 32 ausgebildet, deren Durchmesser 42 so bemessen ist, daß die Stahlkugel 32 zusammen mit dem mittleren Bereich 56 der Aussparung 52 eine Preßpassung bildet. Durch die mittels des Hinterschnitts 64 angeformte Ringschnappverbindung wird die Preßpassung unterstützt und ein Rausfallen der Stahlkugel 32 sicher verhindert. Die Maße des Hinterschnitts 64 werden so gewählt, daß im Idelfall die Spritzgußform auch noch im erkalteten Zustand des Kunststoff-Bauteils 32 leicht entfernt werden kann, was gleichzeitig bedeutet, daß auch das Lagerelement 32 mit geringem Kraftaufwand in die Ringschnappverbindung der Aussparung 52 eingeführt werden kann. Wird dieser Einpreßvorgang ausgeführt, solange das Kunststoff-Bauteil 32 noch warm ist, schrumpft der Kunststoff beim Abkühlen, sodaß die Stahlkugel 32 zusätzlich gegen Verdrehen und Verschieben gesichert wird. Zum einfacheren Einführen des Lagerelements 32 ist am offenen Ende 54 der Aussparung 52 eine Phase 62 angeformt, die das Lagerelement 32 bei der Montage zentriert. Die Stahlkugel 32 wird vorzugsweise vor dem Einpressen gehärtet, um eine Lageroberfläche großer Härte zu erzielen. Die Stahlkugel 32 stützt sich einerseits gegen die Stirnfläche 30 der Spindel 16 und andererseits gegen eine ebene Anlaufscheibe 40 ab, die im Ausführungsbeispiel als Teil des Getriebegehäuses 18 ausgebildet ist. Die kugelförmige Lageroberfläche 38 der Stahlkugel 32 hat nur einen kleinen Auflagepunkt gegenüber der Anlaufscheibe 40, wodurch Reibungsverluste verringert werden. In einer alternativen Ausführung weist die Anlaufscheibe 40 eine Vertiefung auf, in die das Lagerelement 32 eingreift. Dadurch ist zu einem gewissen Grad auch eine radiale Führung der Spindel 16 gewährleistet. Im Ausführungsbeispiel hat die Stahlkugel 32 einen Durchmesser 42 von etwa 5 mm. Der Durchmesser 42 bestimmt die wirksame Lagerfläche, wodurch einerseits die Reibungsverluste und andererseits die Flächenpressung der Axiallagerung vorgegeben werden können. Daher kann je nach Anforderung der Durchmesser 42 der Stahlkugel 32 auch im Bereich zwischen 3 und 7 mm liegen. Der Abstand 46 zwischen dem Kunststoff-Bauteil 36 und der Anlaufscheibe 40 wird durch den Überstand 46 bestimmt, mit dem das Lagerelement 32 über das Kunststoff-Bauteil 36 axial übersteht. Der Überstand 46 des Lagerelements 32 erlaubt einen gewissen Abrieb an demselben oder an der Anlaufscheibe 40 und ermöglicht ein leichtes axiales Verkippen der Spindel 16. Im Ausführungsbeispiel beträgt der Überstand 46 in etwa ein Sechstel bis ein Achtel des Durchmessers 42, kann für andere Anforderungen aber auch im Bereich zwischen einem Viertel und einem Zwanzigstel liegen.

In einer Variation des Ausführungsbeispiels ist das Kunststoff-Bauteil 36 als separates Teil ausgeführt, das aber auch in einem Arbeitsgang mit dem Abtriebsrad an die Spindel 16 angespritzt wird. Das Lagerelement 32 kann zur Stirnseite 30 oder an seinem radialen Umfang auch eine von einer Kugel abweichende Form annehmen, so ist z.B. ein Zylinder mit einer zur Anlaufscheibe 40 hin ausgeformten kugelförmigen Lageroberfläche 38 denkbar. Auch kann die Anlaufscheibe 40 als separates Bauteil ausgeformt sein, das sich am Getriebegehäuse 18 abstützt. Als Werkstoff des Lagerelements 32 kann alternativ zum Stahl auch ein anderes Material verwendet werden, das vorzugsweise eine ähnliche oder bessere Oberflächenhärte als Stahl aufweist.

In einer weiteren Variation ist das Lagerelement 32 als Anlaufpilz 32 ausgeformt, der mit seinem Fuß in die zylinderförmige Aussparung 52 gepreßt wird. Alternativ kann der Fuß auch als Hülse ausgebildet sein, die über eine als Lagerzapfen 52 ausgebildete Aufnahme 52 des Kunststoff-Bauteils 32 gepreßt wird.

## Patentansprüche

1. Verfahren zur Herstellung eines Spindelantriebs, insbesondere für eine Sitzverstellung oder eine Servolenkung, mit einem auf einer Spindel (16) drehfest angeordneten, motorisch angetriebenen Abtriebsrad (26, 28), **gekennzeichnet durch** folgende Schritte:
a) Anformen einer Aufnahme (52) für ein axiales Lagerelement (32) aus Metall an einem Kunststoff-Bauteil (36) beim Anspritzen desselben an einem Ende (22) der Spindel (16),
b) Einpressen des axialen Lagerelements (32) in die Aufnahme (52) des Kunststoff-Bauteils (36), vorzugsweise direkt nach dem Anspritzen des Kunststoff-Bauteils (36), solange der Kunststoff noch warm ist.

2. Verfahren nach Anspruch 1, **dadurch gekennzeichnet, daß** das Kunststoff-Bauteil (36) als ein Teil des Abtriebsrads (26, 28) ausgebildet wird.

3. Verfahren nach einem der Ansprüche 1 oder 2, **dadurch gekennzeichnet, daß** die Aufnahme (52) als im wesentlichen zylinderförmige, axial offene Aussparung (52) im Kunststoff-Bauteil (36) ausgebildet wird.

4. Verfahren nach einem der vorherigen Ansprüche, **dadurch gekennzeichnet, daß** die Aussparung (52) einen Hinterschnitt (64) aufweist, dessen Durchmesser (60) größer ist, als der Durchmesser (58) der Aussparung (52) an deren offenen Ende (54).

5. Verfahren nach einem der vorherigen Ansprüchen, **dadurch gekennzeichnet, daß** das axiale Lagerelement (32) aus Stahl gefertigt und eingebracht wird.

6. Verfahren nach einem der vorherigen Ansprüchen, **dadurch gekennzeichnet, daß** das axiale Lagerelement (32) zur Erzeugung einer harten Oberfläche vor dem Einpressen in die Aufnahme (52) gehärtet wird.

7. Spindel-Antrieb mit einem auf einer Spindel (16) drehfest angeordneten, motorisch angetriebenen Abtriebsrad (26, 28) und an einem Ende (22) der Spindel (16) drehfest angeordneten Kunststoff-Bauteil (36), insbesondere hergestellt nach einem der Ansprüche 1 bis 6, **dadurch gekennzeichnet, daß** ein separat ausgebildetes, axiales Lagerelement (32) aus Metall in einer axial offenen Aussparung (52) im Kunsstoff-Bauteil (36), insbesondere mittels eines Ringschnappverschlusses (64), angeordnet ist.

8. Spindel-Antrieb nach Anspruch 7, **dadurch gekennzeichnet, daß** die Aussparung (52) an ihrem offenen Ende (54) einen, insbesondere zwischen 0,1 bis 0,4 mm, geringeren Durchmesser (58) aufweist, als im mittleren axialen Bereich (56) der Aussparung (52), der insbesondere einen Durchmesser (60) zwischen 3 bis 7 mm aufweist.

9. Spindel-Antrieb nach einem der Ansprüche 7 oder 8, **dadurch gekennzeichnet, daß** am offenen Ende (54) der Aussparung (52) eine Phase (62) angeformt ist.

10. Spindel-Antrieb nach einem der Ansprüche 7 bis 9, **dadurch gekennzeichnet, daß** das Lagerelement (32) im wesentlichen kugelförmig ausgebildet ist.

11. Spindel-Antrieb nach einem der Ansprüche 7 bis 10, **dadurch gekennzeichnet, daß** sich das axiale Lagerelement (32) gegen eine Anlaufscheibe (40) abstützt, die insbesondere als Teil eines Getriebegehäuses (18) ausgebildet ist.

12. Spindel-Antrieb nach einem der Ansprüche 7 bis 11, **dadurch gekennzeichnet, daß** das Lagerelement (32) einerseits direkt an einer Stirnseite 30 der Spindel (16) angeordnet ist und andererseits aus dem offenen Ende (54) der Aussparung (52) ragt.

## Claims

1. Method for manufacturing a spindle drive, in particular for a seat adjustment means or a power steering system, having an output gear wheel (26, 28) which is arranged in a rotationally fixed manner on a spindle (16) and is driven by a motor, **characterized by** the following steps:
a) moulding of a receptacle (52) for an axial bearing element (32) made from metal on a plastic component (36) during the injection moulding of the latter on one end (22) of the spindle (16),
b) pressing of the axial bearing element (32) into the receptacle (52) of the plastic component (36), preferably directly after the injection moulding of the plastic component (36), as long as the plastic is still warm.

2. Method according to Claim 1, **characterized in that** the plastic component (36) is configured as a part of the output gear wheel (26, 28).

3. Method according to either of Claims 1 and 2, **characterized in that** the receptacle (52) is configured as a substantially cylindrical, axially open cut-out (52) in the plastic component (36).

4. Method according to one of the preceding claims, **characterized in that** the cut-out (52) has an undercut (64), the diameter (60) of which is greater than the diameter (58) of the cut-out (52) at its open end (54).

5. Method according to one of the preceding claims, **characterized in that** the axial bearing element (32) is manufactured from steel and is introduced.

6. Method according to one of the preceding claims, **characterized in that** the axial bearing element (32) is hardened to produce a hard surface before being pressed into the receptacle (52).

7. Spindle drive having an output gear wheel (26, 28) which is arranged in a rotationally fixed manner on a spindle (16) and is driven by a motor, and a plastic component (36) which is arranged in a rotationally fixed manner at one end (22) of the spindle (16), in particular manufactured according to one of Claims 1 to 6, **characterized in that** a separately configured, axial bearing element (32) made from metal is arranged in an axially open cut-out (52) in the plastic component (36), in particular by means of an annular snap-action closure (64).

8. Spindle drive according to Claim 7, **characterized in that** the cut-out (52) has a smaller diameter (58), in particular by between 0.1 and 0.4 mm, at its open end (54) than in the central axial region (56) of the cut-out (52), which central axial region (56) has, in particular, a diameter (60) of between 3 and 7 mm.

9. Spindle drive according to either of Claims 7 and 8, **characterized in that** a bevel (62) is formed at the open end (54) of the cut-out (52).

10. Spindle drive according to one of Claims 7 to 9, **characterized in that** the bearing element (32) is of substantially spherical configuration.

11. Spindle drive according to one of Claims 7 to 10, **characterized in that** the axial bearing element (32) is supported against a stop disc (40) which is configured, in particular, as part of a gear-mechanism housing (18).

12. Spindle drive according to one of Claims 7 to 11, **characterized in that** the bearing element (32) is arranged at one end directly on an end side (30) of the spindle (16) and projects at the other end out of the open end (54) of the cut-out (52).

## Revendications

1. Procédé de fabrication d'un entraînement par vis sans fin, en particulier pour le réglage d'un siège ou pour une servo-direction, comprenant une roue de sortie (26, 28) montée solidairement en rotation sur une vis (16) et entraînée par un moteur,
**caractérisé par** les phases suivantes :
a) former à une extrémité de la vis (16) un logement (52) pour un élément de palier axial en métal (32) dans une pièce en matière plastique (36) au moment de l'injection de cette dernière,
b) emmancher à force l'élément de palier axial (32) dans le logement (52) de la pièce en matière plastique (36), de préférence aussitôt après l'injection de la pièce en matière plastique (36), quand celle-ci est encore chaude.

2. Procédé selon la revendication 1,
**caractérisé en ce que**
la pièce en matière plastique (36) est constituée par une partie de la roue de sortie (26, 28).

3. Procédé selon une des revendications1 ou 2,
**caractérisé en ce que**
le logement (52) est constitué par un évidement sensiblement cylindrique (52) formé dans la pièce en matière plastique (36).

4. Procédé selon une des revendications précédentes,
**caractérisé en ce que**
l'évidement (52) présente une contre-dépouille (64) dont le diamètre (60) est plus grand que la diamètre (58) de l'évidement (52) à l'extrémité ouverte de ce dernier (54).

5. Procédé selon une des revendications précédentes,
**caractérisé en ce que**
l'élément de palier axial (32) est fabriqué en acier puis mis en place.

6. Procédé selon une des revendications précédentes,
**caractérisé en ce que**
l'élément de palier axial (32) est trempé pour produire une surface dure avant l'emmanchement à force dans le logement (52).

7. Entraînement par vis sans fin comprenant une roue de sortie (26, 28) entraînée par un moteur, montée solidairement en rotation sur une vis (16) et une pièce en matière plastique (36) montée solidairement en rotation à une extrémité (22) de la vis (16), en particulier fabriquée selon l'une des revendications 1 à 6,
**caractérisé en ce qu'**
un élément de palier axial en métal (32) formé séparément est disposé dans un évidement (52) ménagé dans la pièce en matière plastique (36) et s'ouvrant axialement, en particulier au moyen d'un assemblage à encliquetage annulaire (64).

8. Entraînement de vis selon la revendication 7,
**caractérisé en ce qu'**
à son extrémité ouverte (54), l'évidement (52) présente un diamètre inférieur de 0,1 mm à 0,4 mm, à celui de la région axialement centrale de l'évidement (52), qui présente un diamètre (60) compris entre 2 mm et 7 mm.

9. Entraînement de vis selon une des revendications 7 ou 8,
**caractérisé en ce qu'**
à l'extrémité ouverte (54) de l'évidement (52) est formé un chanfrein (62).

10. Entraînement de vis selon une des revendications 7 à 9,
**caractérisé en ce que**
l'élément de palier (32) est sensiblement sphérique.

11. Entraînement de vis selon une des revendications 7 à 10,
**caractérisé en ce que**
l'élément de palier axial (32) prend appui contre une rondelle de portée (40) constituée en particulier par une partie d'un carter de mécanisme (18).

12. Entraînement de vis selon une des revendications 7 à 11,
**caractérisé en ce que**
d'une part, l'élément de palier (32) est disposé directement contre un côté frontal (30) de la vis (16) et, d'autre part, il émerge de l'extrémité ouverte (54) de l'évidement (52).
